# EUROPÄISCHE PATENTANMELDUNG

(11) **EP 0 893 153 A1**
(43) Veröffentlichungstag der Anmeldung: **27.01.1999**
(21) Anmeldenummer: 97112724.6
(22) Anmeldetag: 24.07.1997
(51) Int. Cl.: B01D 53/86, F23G 7/06, F28D 19/04

(54) **Rauchgasleitung und Verfahren zur Rauchgasbehandlung**

(71) Anmelder: SIEMENS AKTIENGESELLSCHAFT, 80333 München (DE); Apparatebau Rothemühle Brandt & Kritzler Gesellschaft mit beschränkter Haftung, 57482 Wenden-Rothemühle (DE)
(72) Erfinder: Hums, Erich, Dr., Dipl.-Chem.,, 91093 Hessdorf (DE); Klatt, Andreas, Dipl.-Ing.,, 90451 Nürnberg, (DE); Spielmann, Horst, Dipl.-Ing.,, 91083 Baiersdorf (DE); Brandt, Christoph, Dipl.-Ing.,Dipl.-Wirtsch.-Ing.,, 57482 Wenden-Vahlberg (DE); Niggeschmidt, Werner, Dipl.-Ing., 57462 Olpe, (DE)
(74) Vertreter: Epping, Wilhelm, Dr.-Ing.

(57) **Zusammenfassung**

Eine Rauchgasleitung (1) einer Verbrennungsanlage umfaßt eine Reaktionszone (2) zum Abbau von Schadstoffen und einen mit einem Dioxin-Katalysator (4) ausgestatteten nachgeschalteten Wärmetauscher (3) zur Abkühlung des Rauchgases (R). Durch den Dioxin-Katalysator (4) im Wärmetauscher (3) läßt sich eine erneute Bildung von Dioxinen durch die de novo Synthese bei Temperaturabsenkung vermeiden.

## Beschreibung

Die Erfindung bezieht sich auf eine Rauchgasleitung mit einer Reaktionszone und einem nachgeschalteten Wärmetauscher sowie auf ein verfahren zur Rauchgasbehandlung.

Eine derartige Rauchgasleitung ist zur Führung und zur Behandlung des Rauch- oder Abgases einer Verbrennungsanlage wie einem Fossilkraftwerk oder einer Müllverbrennungsanlage bekannt.

In der Reaktionszone wird das Rauchgas thermisch oder katalytisch behandelt, um etwaige im Rauchgas vorhandene Schadstoffe abzubauen. Auch werden in einer derartigen Reaktionszone sogenannte Adsorbentien zur Aufnahme und zur Speicherung der Schadstoffe eingesetzt. Eine derartige Reaktionszone ist beispielsweise ein von dem Rauchgas durchströmter Reaktor mit einem darin angeordneten, spezifisch wirkenden Katalysator.

Im nachgeschalteten Wärmetauscher wird das Rauchgas abgekühlt, ehe es in die Umwelt gelangt. Auch ist es bekannt, die dem Rauchgas entzogene Wärme beispielsweise durch Erwärmung der Verbrennungsluft wieder in den Verbrennungsprozeß zurückzuführen. Ein derartiger, hierfür geeigneter Wärmetauscher wird auch als Regenerativ-Wärmetauscher bezeichnet.

Bei der Verbrennung von organischen Stoffen oder von Hausmull, welcher ein Gemisch aus organischen Stoffen und Kunststoffen darstellt, entstehen neben Kohlenmonoxid, Stickoxiden und Kohlenwasserstoffen insbesondere auch Dioxine, welche bereits in kleinsten Mengen für den Menschen toxisch wirken. Der Begriff 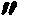 Dioxine" steht dabei als Sammelbegriff für die Gruppe der zyklischen halogenierten aromatischen Polyether.

Zu dieser Gruppe gehören die zyklischen Ether (Furane) sowie die zyklischen Diether (die eigentlichen Dioxine). Als besonders toxisch wirkende Vertreter seien hier die Polychlor-Dibenzodioxine (PCDD) und die Polychlor-Dibenzofurane (PCDF) genannt.

Zur Entfernung der genannten Schadstoffe werden hauptsächlich spezifisch wirkende Katalysatoren in der Reaktionszone der Rauchgasleitung eingesetzt.

In der EP 0 447 537 B1 wird hierzu ein Katalysator-System zur Entfernung von Stickoxiden und Dioxinen aus dem Rauchgas einer Müllverbrennungsanlage beschrieben. Hierbei sind ein üblicher DeNOx-Katalysator, welcher nach dem bekannten SCR-Verfahren der selektiven katalytischen Reduktion unter Zugabe eines Reduktionsmittels Stickoxide zu molekularem Stickstoff und Wasser reduziert, und ein Oxidations-Katalysator, welcher Dioxine oxidiert, in Serie geschaltet. Beide Katalysatoren enthalten im wesentlichen Titandioxid TiO₂, Wolframtrioxid WO₃, Vanadinpentoxid V₂O₅ und gegebenenfalls Molybdäntrioxid MoO₃.

Auch ist aus der DE 43 04 323 A1 ein Katalysator-System zur Entfernung von Stickoxiden NOₓ, Kohlenmonoxid CO und Dioxinen bekannt. Dabei ist bezüglich der Strömungsrichtung eines Rauchgases einer Verbrennungsanlage ein Reduktions- oder SCR-Katalysator vor einem Oxidations-Katalysator und dieser vor einem Dioxin-Katalysator angeordnet.

Des weiteren sind auch Katalysatoren bekannt, welche im Gegensatz zu SCR-Katalysatoren ohne separate Reduktionsmittel im Rauchgas enthaltene Stickoxide entfernen. Diese Katalysatoren werden allgemein SCD-Katalysatoren (SCD = Selective Catalytic Decomposition) genannt.

Auch ist es bekannt, im Rauchgas enthaltene Dioxine in einer Reaktionszone durch eine Erwärmung auf eine Temperatur von über 800 °C thermisch zu zersetzen.

Ferner ist es aus der EP 0 502 443 B1 bekannt, den Abbau von Stickoxiden direkt in einem Regenerativ-Wärmetauscher durch einen dort angeordneten SCR-Katalysator vorzunehmen.

Bei Verwendung eines der Reaktionszone nachgeschalteten Wärmetauschers hat sich jedoch gezeigt, daß das in die Umwelt gelangende Rauchgas in nicht unerheblichem Umfang erneut Dioxine aufweist.

Der Erfindung liegt daher die Aufgabe zugrunde, bei einer Rauchgasleitung mit einer Reaktionszone und einem nachgeschalteten Warmetauscher die Dioxin-Emissionen in die Umwelt zuverlässig zu vermeiden.

Die Aufgabe wird erfindungsgemäß gelöst durch eine Rauchgasleitung mit einer Reaktionszone zum Abbau von Schadstoffen in einem Rauchgas und einem nachgeschalteten Warmetauscher zur Kühlung des Rauchgases, wobei der Wärmetauscher einen zum Abbau von Dioxinen ausgestalteten Dioxin-Katalysator umfaßt.

Die Erfindung geht dabei von der Erkenntnis aus, daß in einem Rauchgas einer Verbrennungsanlage bei einer Temperatur zwischen 250 und 400 °C durch eine sogenannte de novo Synthese vermehrt Dioxine gebildet werden. Der Mechanismus einer derartigen de novo Synthese ist ausführlich beschrieben in VDI-Berichte Hr. 634, 1987, Seiten 557 bis 584. Hierbei werden Dioxine in Gegenwart von Sauerstoff aus unverbrannten organischen Verbindungen und Metallchloriden gebildet, wobei vorhandene Schwermetallkomponenten in einer ersten Stufe eine Chlorbildung aus den genannten Metallchloriden katalysieren.

Da die für eine de novo Synthese ursächlichen Verbindungen in den Rauchgasen eines Fossilkraftwerks oder einer Müllverbrennungsanlage auch nach erfolgter katalytischer Rauchgasbehandlung im Rauchgas enthalten sind, stellt jeder der Reaktionszone nachgeschaltete Wärmetauscher infolge der hierdurch hervorgerufenen Temperaturabsenkung im Rauchgas eine potentielle Quelle für eine erneute Dioxin-Bildung dar. Insbesondere wird in der Regel in einem nachgeschalteten Wärmetauscher das Rauchgas auf eine Temperatur von unterhalb 400°C abgekühlt.

Eine derartige Neubildung von Dioxinen im Rauchgas nach bereits erfolgter Schadstoffbehandlung wird jedoch sicher vermieden, falls der der Reaktionszone nachgeschaltete Wärmetauscher einen zum Abbau von Dioxinen ausgestalteten Dioxin-Katalysator umfaßt. Auf diese Weise wird zum einen in der Temperatursenke die Neubildung von Dioxinen vermieden, und zum anderen werden hierdurch bereits gebildete Dioxine in unschädliche Substanzen zerlegt.

Als Dioxin-Katalysator kann beispielsweise ein Katalysator verwendet werden, der TiO₂, WO₃, V₂O₅ und gegebenenfalls MoO₃ enthält. Der Gehalt an V₂O₅ ist dabei den Rauchgasbedingungen anzupassen. Dabei ist ein Katalysator in Platten-, Waben- oder Pelletform geeignet.

Besonders kostengünstig und technisch einfach realisierbar ist es, wenn das Wärmetauschelement des Wärmetauschers durch den Dioxin-Katalysator selbst gebildet wird, und an diesem der Wärmeaustausch stattfindet. Hierfür eignet sich vorteilhafterweise ein entsprechend beschichteter, waben- oder plattenförmiger Katalysator, welcher aufgrund der hohen spezifischen Oberfläche auch eine hohe Wärmespeicherkapazität aufweist.

Der Wirkungsgrad der Verbrennungsanlage erhöht sich, falls als Wärmetauscher ein Regenerativ-Wärmetauscher verwendet ist. Ein derartiger Regenerativ-Wärmetauscher entzieht dem Rauchgas auf der einen Seite die Wärme und führt auf der anderen Seite die entzogene Wärme dem Verbrennungsprozeß der Verbrennungsanlage wieder zu. Dies kann beispielsweise durch eine Erwärmung der Verbrennungsluft geschehen.

Der Dioxingehalt des Rauchgases läßt sich weiter verringern, falls die Reaktionszone einen zusätzlichen Dioxin-Katalysator oder einen Dioxin-Adsorber umfaßt. Als Dioxin-Katalysator ist beispielsweise ein waben- oder plattenförmiger Katalysator auf Titandioxidbasis bereits erwähnter Zusammensetzung geeignet. Auch ist ein Dioxin-Katalysator in Form einer Schüttung oder in Form von Pellets vorstellbar.

Insbesondere die Serienschaltung eines Dioxin-Katalysators mit einem DeNOx-Katalysator in der Reaktionszone bietet Vorteile, da hierdurch bei im wesentlichen identischen Reaktionsbedingungen gleichzeitig Stickoxide und Dioxine aus dem Rauchgas entfernt werden können. Da beide Katalysatoren eine ähnliche chemische Zusammensetzung aufweisen, läßt sich zudem ein einheitlicher Katalysatorträger für beide Katalysatoren verwenden.

Die Aufgabe wird weiter erfindungsgemäß durch ein Verfahren zur Rauchgasbehandlung gelöst, bei dem ein Rauchgas einer Verbrennungsanlage zuerst eine Reaktionszone zum Abbau von Schadstoffen durchströmt und anschließend zur Abkühlung über einen nachgeschalteten Wärmetauscher geführt wird, wobei das Rauchgas im Wärmetauscher mit einem zum Abbau von Dioxinen vorgesehenen ersten Dioxin-Katalysator kontaktiert wird.

Ein besonders effektiver Abbau von Dioxinen und Stickoxiden läßt sich erzielen, wenn das Rauchgas in der Reaktionszone zunächst bei einer Temperatur von 300 bis 500 °C mit einem DeNOx-Katalysator und/oder mit einem zusätzlichen zweiten Dioxin-Katalysator kontaktiert wird und anschließend zur Abkühlung über den Wärmetauscher mit dem ersten Dioxin-Katalysator geführt wird.

Ausführungsbeispiele der Erfindung werden anhand einer Zeichnung näher erläutert. Dabei zeigen:
- FIG 1: schematisch einen Schnitt durch eine Rauchgasleitung mit einer Reaktionszone und einem nachgeschalteten Wärmetauscher und
- FIG 2: schematisch einen Schnitt durch eine Rauchgasleitung mit einer Reaktionszone und einem nachgeschalteten Wärmetauscher, wobei die Reaktionszone einen kombinierten DeNOx/Dioxin-Katalysator umfaßt.

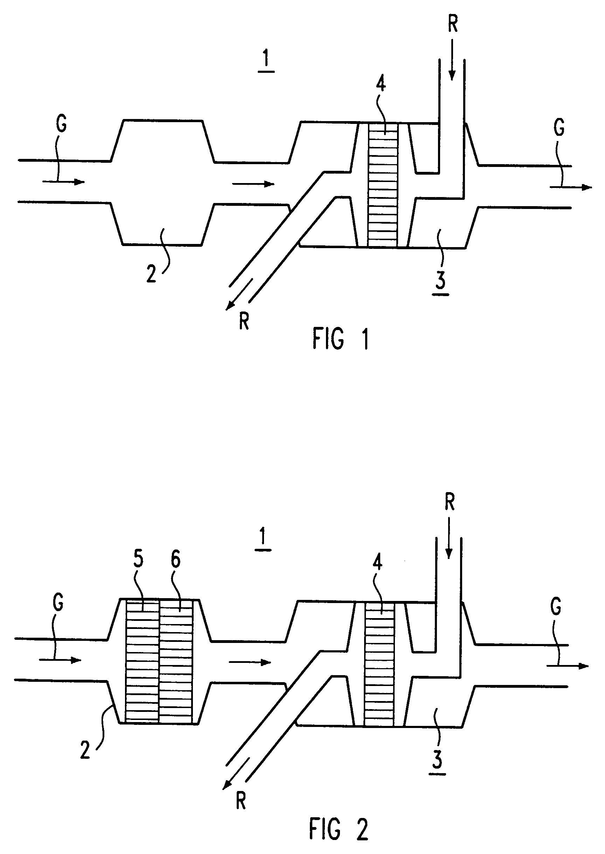

Figur 1 zeigt schematisch eine Rauchgasleitung 1 einer hier nicht näher dargestellten Verbrennungsanlage, insbesondere einer Müllverbrennungsanlage. Die Rauchgasleitung 1 umfaßt hierbei eine Reaktionszone 2 und einen nachgeschalteten Wärmetauscher 3, welcher als ein Regenerativ-Wärmetauscher ausgebildet ist. Zur Abgasbehandlung strömt das Rauchgas G, welches neben gasförmigen Schadstoffen wie Stickoxiden, Kohlenmonoxid, unverbrannten organischen Verbindungen und Dioxinen auch feste Bestandteile wie schwermetallenthaltende Stäube und Metallchloride enthält, zum Abbau von Schadstoffen zunächst in die Reaktionszone 2. Dort werden die gasförmigen Schadstoffe beispielsweise katalytisch oder thermisch entfernt. Übliche Temperaturen zur katalytischen Entfernung von Stickoxiden oder Dioxinen sind dabei ca. 300 bis 500 °C. Für eine thermische Zersetzung der Dioxine wird das Rauchgas auf Temperaturen von über 800°C aufgeheizt.

Nach erfolgter Schadstoffminderung durchströmt das Rauchgas G den nachgeschalteten Warmetauscher 3. In diesem wird das Rauchgases G auf eine Temperatur unterhalb 400 °C abgekühlt. Die entzogene Wärme wird erneut dem Verbrennungsprozeß der Verbrennungsanlage zugeführt. Hierzu durchströmt das Rauchgas G ein Wärmetauschelement des Wärmetauschers 3, welches beim Ausführungsbeispiel der Figur 1 als ein Dioxin-Katalysator 4 in Wabenform ausgebildet ist. Der Dioxin-Katalysator besteht dabei im wesentlichen aus Titandioxid TiO₂ und Wolframtrioxid WO3. Die frei zugängliche Oberfläche weist dabei einen Gehalt an Vanadinpentoxid V₂O₅ von ca. 20 % auf. Durch eine Rotation des Dioxin-Katalysators 4 um die Längsachse der Rauchgasleitung 1 wird der erwärmte Teil des Dioxin-Katalysators 4 in eine seitlich angeordnete Reinluftleitung gedreht, wobei die gespeicherte Wärmemenge an ein die Reinluftleitung durchströmendes Reingas R abgegeben wird. Das hierdurch erwärmte Reingas R wird (hier nicht eingezeichnet) der Verbrennung der Verbrennungsanlage zugeführt. Nach Durchlaufen des Wärmetauschers 3 gelangt das Rauchgas G schließlich durch einen nicht eingezeichneten Kamin nach außen.

Infolge des im Wärmetauscher 3 als Wärmetauschelement angeordneten Dioxin-Katalysators 4 kann eine erneute Dioxin-Bildung durch die de novo Synthese in der Temperatursenke des nachgeschalteten Wärmetauschers 3 verhindert werden.

Figur 2 zeigt wie Figur 1 eine Rauchgasleitung 1, wobei in der Reaktionszone 2 ein DeNOx-Katalysator 5 und ein in Serie geschalteter Dioxin-Katalysator 6 angeordnet sind. Die beiden Katalysatoren sind hierbei Trägerkatalysatoren mit jeweils einem wabenförmigen Träger. Der Träger besteht bei beiden Katalysatoren 5, 6 im wesentlichen aus Titandioxid TiO₂ und Wolframtrioxid WO3. Der DeNOx-Katalysator 5 und der Dioxin-Katalysator 6 weisen in der jeweiligen für das Rauchgas frei zugänglichen Oberfläche Vanadinpentoxid V₂O₅ auf.

## Patentansprüche

1. Rauchgasleitung (1) mit einer Reaktionszone (2) zum Abbau von Schadstoffen in einem Rauchgas und einem nachgeschalteten Wärmetauscher (3) zu Kühlung des Rauchgases, wobei der Wärmetauscher (3) einen zum Abbau von Dioxinen ausgestalteten Dioxin-Katalysator (4) umfaßt.

2. Rauchgasleitung (1) nach Anspruch 1, **dadurch gekennzeichnet,** daß der Dioxin-Katalysator (4) als ein Element des Wärmetauschers (3) ausgebildet ist, an dem ein Wärmeaustausch stattfindet.

3. Rauchgasleitung (1) nach Anspruch 1 oder 2, wobei der Wärmetauscher (3) als ein Regenerativ-Wärmetauscher ausgebildet ist.

4. Rauchgasleitung (1) nach einem der Ansprüche 1 bis 3, wobei die Reaktionszone (2) einen zusätzlichen Dioxin-Katalysator (6) umfaßt.

5. Rauchgasleitung nach Anspruch 4, wobei in der Reaktionszone (2) zur Entfernung von Stickoxiden ein DeNOx-Katalysator (5) in Serie zu dem zusätzlichen Dioxin-Katalysator (6) geschaltet ist.

6. Verfahren zur Rauchgasbehandlung, wobei ein Rauchgas (R) einer Verbrennungsanlage zuerst durch eine Reaktionszone (2) zum Abbau von Schadstoffen geleitet und anschließend in einem Wärmetauscher (3) gekühlt wird, wobei das Rauchgas (R) im Wärmetauscher (3) mit einen zum Abbau von Dioxinen vorgesehenen ersten Dioxin-Katalysator (4) kontaktiert wird.

7. Verfahren zur Rauchgasbehandlung nach Anspruch 6, wobei das Rauchgas (R) in der Reaktionszone (2) bei einer Temperatur von 300 bis 500 °C mit einem DeNOx-Katalysator (5) zum Abbau von Stickoxiden und mit einem zusätzlichen zweiten Dioxin-Katalysator (6) zum Abbau von Dioxinen kontaktiert und in dem nachgeschalteten Wärmetauscher (3) auf eine Temperatur von unter 400 °C abgekühlt wird.
